# EUROPEAN PATENT SPECIFICATION

(11) **EP 2 746 527 B1**
(45) Date of publication and mention of the grant of the patent: **07.10.2020**
(21) Application number: 14160393.6
(22) Date of filing: 27.06.2009
(51) Int. Cl.: E21B 10/32, E21B 47/08, E21B 44/00, E21B 47/01, A01N 43/40, E21B 47/00, E21B 47/09, E21B 47/12, E21B 49/00

(54) **Drilling tool and method for widening and simultaneously monitoring the diameter of wells and fluid properties**
Bohrwerkzeug und Verfahren zum Aufweiten und gleichzeitigen Überwachen des Durchmessers von Bohrlöchern und Flüssigkeitseigenschaften
Outil de forage et procédé pour élargir et surveiller simultanément le diamètre d'un puits et des propriétés de fluide

(30) Priority: 27.06.2008 GB 0811815
(43) Date of publication of application: 25.06.2014
(62) Divisional of application: 09769398.0
(73) Proprietor: Smart Reamer Drilling Systems Ltd., Slough Industrial Estate, Berkshire SL1 4DX (GB)
(72) Inventor: RASHEED, Wajid, Slough, Berkshire SL2 5EH (GB)
(74) Representative: Wegner, Hans

(56) References cited:
- WO-A1-2006/083738
- US-A1- 2007 153 626
- US-A1- 2008 128 175
- DATABASE WPI Week 199518 Thomson Scientific, London, GB; AN 1995-137390 XP002769667, -& JP H07 62967 A (TAISEI CONSTR CO LTD) 7 March 1995 (1995-03-07)

## Description

### FIELD OF THE INVENTION

The present invention relates to an expansion tool that incorporates extendable cutting blocks and stabilizers and whose operation is integrated with measurements obtained from a caliper for measuring the underreamed wellbore diameter, such as an acoustic sensor or gauge probe, vibration sensors and acoustic sensors that are independent of the former, which determine the drilling fluid characteristics and block positional sensors. The tool is capable of simultaneously underreaming and measuring wellbore diameters, and expanding the diameter of a steel tubular used as casing particularly in the oil and gas industry. The tool finds particular use as an underreaming and caliper tool, but can also be configured without cutting elements to provide downhole centralization, directional stabilisation, or as a means for expanding the diameter of steel tubulars.

It is to be understood that the term 'expansion' as used herein refers to the capacity of the tool to expand outwardly toward and against the interior wall of a passage, such as a borehole, especially a wellbore, or a tubular used as casing, and then to apply pressure or a cutting action against the wall. It is not always essential that the wall itself be expanded, since the tool can be used for centralisation or stabilisation or like purposes without necessarily expanding the passage.

When constructing an exploration or production well, numerous downhole operations are conducted to drill and measure the borehole so that it meets the desired dimensions specified in the well-plan. Drilling operations may utilise a reamer to ensure that the hole diameter that has been drilled by the bit is maintained within the given tolerance for the plan. The hole diameters drilled by the bit and perfected by the reamer are substantially the same. The maximum cutting diameter of the reamer, which is fixed, is substantially the same as the bit diameter. This maximum cutting diameter is defined by the pass-through diameter of any restriction in the borehole above the operating location.

In contrast to a reamer, an underreamer is used to enlarge the diameter of the borehole beyond its original drilled size. Enlargement is typically done below a restriction in the borehole, and the cutting diameter of an underreamer is always greater than that of the pass-through diameter of the restriction. Additionally, an underreamer is provided with activation and deactivation modes and mechanisms for extending and retracting cutting elements to ensure effective underreaming once it has passed below the restriction.

Measurement may involve the acquisition and communication to surface of various types of wellbore data such as resistivity, porosity, permeability, azimuth, inclination and borehole diameter or rugosity, formation dips or bedding angles.

Measurement itself occurs in two modes, either wireline or logging-while-drilling. Wireline is the most common measurement technique and is performed as a separate and consecutive activity to drilling, involving the conveyance of measurement tools on a wire or cable. Wireline calipers use a plurality of fingers to take borehole diameter measurements. However, wireline calipers can only take measurements in an axial direction. Due to this limitation, they can only be used after drilling otherwise the rotational and impact forces of drilling would cause them to break. Hence a separate caliper run is required after drilling to measure borehole diameter.

Logging-while-drilling tools may acquire various data about the wellbore. Acoustic calipers may be incorporated within logging tools. As they can be rotated, acoustic calipers may be used while drilling to acquire measurement data. However, almost all logging tools are configured as complete systems and are only available at very high cost and used in less than 1% of wells worldwide. Further they also suffer from limitations in applications with slide drilling, where a downhole motor rotates the bit and drags the drillstring and bottom-hole assembly (BHA). In rotary steerable applications the logging tools are configured near to the bit. Therefore, the location of the acoustic caliper is within the BHA below the underreamer. It can only give readings after the section of the wellbore has been underreamed.

Borehole measurements do not always rely on acoustic calipers. Therefore, it is routine for borehole measurements to be taken in a separate activity after drilling or underreaming (wellbore enlargement) has taken place.

The time-lag associated with the separated operations of enlargement and measurement leads to uncertainty and unnecessary cost. In the case of underreaming, measurements are taken a posteriori, which means a separate caliper run and at times further corrective runs to attain the desired wellbore diameter.

### BACKGROUND OF THE INVENTION

Oil and gas accumulations are found at depth in different geological basins worldwide. Exploration and production of such accumulations rely on the construction of a well according to a well plan.

Various well types exist and are defined according to usage such as wildcats or those used in exploration, delineation, and production and injection. Variations in well profile exist also according to vertical, slant, directional and horizontal trajectories. Each well differs according to the oil company's objectives and the challenges that a given basin presents from the surface of the earth or the ocean to reaching the hydrocarbon reservoir at a given underground depth.

Engineering challenges are related to the location of the well-site such as onshore or offshore, seawater depths, formation pressures and temperature gradients, formation stresses and movements and reservoir types such as carbonate or sandstone. To overcome these challenges, a highly detailed well plan is developed which contains the well objective, coordinates, legal, geological, technical and well engineering data and calculations.

The data is used to plot the well profile, and plan its execution using precise bearings, which is designed in consecutive telescopic sections - surface, intermediate and reservoir. To deliver the well objective and maintain the integrity and operating capacity of the well over its lifecycle, a given wellbore with multiple sections and diameters is drilled from surface. Although there are many variants, a simple vertical well design could include the following dimensions: a surface or top-hole diameter of 17½" (445mm), intermediate sections of 13 5/8" (360mm) and 9 5/8" (245mm) narrowing down to a bottom-hole diameter of 8½" (216mm) in the reservoir section.

Each consecutive section is 'cased' with a number of metal tubes placed into the wellbore with the specified diameter according to the length of the section. Said tubes are connected to each other after which they are cemented inwardly to the outer wall of the well. In this way, a well is constructed in staged sections, each section dependent on the completion of the previous section until the well is isolated from the formation in question along the entire distance from surface to the reservoir.

Scarcity of oil and gas is driving oil and gas companies to explore and develop reserves in more challenging basins such as those in water-depths exceeding 6,000 ft (1800m) or below massive salt sections. These wells have highly complex directional trajectories with casing designs including 6 or more well sections. Known in the art as 'designer' or 'close tolerance casing' wells, these wells have narrow casing diameters with tight tolerances and have created a need to enlarge the wellbore to avoid very narrow reservoir sections and low production rates.

Therefore, the bottom-hole assemblies that are needed to drill these wells routinely include devices to underream the well-bore below a given casing diameter or other restriction. In this way, underreaming has become an integral part of well construction and there is now an increased dependence on underreaming to meet planned wellbore diameters. After underreaming, the underreamer is withdrawn from the borehole and replaced by the caliper, which is an instrument for measuring the internal dimensions of the bore either mechanically, typically by means of extending fingers that contact the wall of the bore, or by acoustic techniques or other echo-based sounding techniques using reflected acoustic signals.

Previously, the underreamer and caliper have been considered as two separate tools, each involved in distinct functions. Typically, an underreaming run could take 24 hours, after which a further 24 hours would be required for preparation of the caliper run. A further 24 hours could be taken in the caliper run before knowledge could be gained of actual wellbore diameters. This time-lag between underreaming and caliper measurements therefore could easily exceed 48 hours depending on the depths involved. If the actual hole diameter did not match the planned diameter, casing tolerances would not be met and therefore a corrective run would be required and the whole cycle of underreaming and caliper measurements would need to be repeated.

In other applications such as expansion of the diameter of metal tubulars or increased cementing thicknesses, the tolerances between the enlarged well-bore and the expanded steel tubular are very close. Variations of 1" (25mm) in the diameter can lead to the failure of the well construction activity.

Patent specification WO2006/083738 outlines a mechanical caliper and a method for taking measurements during drilling and logging-while-drilling. The specification outlines generic configurations of mechanical calipers-while-drilling as an improvement on measurements taken after drilling or wireline measurements.

To those skilled in the art it is clear that underreaming applications extend beyond drilling into many production and completion activities.

WO2006/083738 does not solve the problem of providing an integrated and automated diagnostic tool, it does not address the integration or automation of a caliper and underreamer, nor does it disclose an underreaming tool of any kind. The disclosure of a cutting tool' is further specified exclusively as a cutting bit' or 'reaming bit' which to those skilled in the art signify 'drilling' and 'maintaining hole diameter' respectively. Both processes are distinct from underreaming which is concerned with increasing hole diameter below a restriction.

Moreover, current caliper designs that measure during drilling are based on calipers found in the prior art whose designs are based on pivot or mechanical mechanisms which are known in the art to be subject to breakage or malfunction due to high bending moments or drilling fluid packing out between moving parts and causing, in the tool, an inability to function or an inability to retrieve the bottom-hole assembly.

Patent JP7062967 would not have an application at the depths that are common in oil and gas wellbores and nor would it be capable of automatically diagnosing undergauge wellbore diameters or detecting underreamer failure modes. Therefore, it would not be a reliable and accurate means of verifying wellbore diameter.

In Patent Specification US2000/6419033 an apparatus and method for drilling a wellbore are outlined wherein a pilot wellbore section is drilled by a bit and is enlarged by a trailing underreamer to the desired diameter. One or more steering sections between the underreamer and drill bit are utilized for maintaining and changing the drilling direction. The specification outlines generic configurations of directional drilling using a plurality of adjustable force applications in a non-rotating sleeve and control means thereof. There is no teaching of control or measurement of underreaming wellbore diameters in this invention.

To those skilled in the art and as can be seen from the well construction process, US2000/6419033 focuses on directional drilling and the means of controlling the force applied to the wellbore, and does not address the same problems as the present invention which integrates and automates the underreamer and caliper.

Moreover, the disclosure concerns a specific type of bottom-hole assembly for a plurality of forces applied to the members in directional drilling and underreaming. This precludes all other systems of directional drilling such as those that are rotating or those that do not use independent forces applied to the wellbore.

Moreover, US2000/6419033 focuses on the specific liner drilling application problem which is not an aspect of the present invention which is intended to eliminate the uncertainty associated with the prior art in all underreaming applications.

Prior art specification WO94/21889 relates to geothermal wells and discloses the configuration of an underreamer, a stabilizer and a caliper in a main body and a plurality of segments. The caliper is used to 'thrust' the device forward and not as a wellbore measurement caliper.

To those skilled in the art, it is seen that WO94/21889 refers to a thrust caliper to create a bidirectional force rather than a caliper taking borehole dimensions or other measurements integrated within the underreamer itself.

In the aspects of an integrated underreamer and caliper tool capable of verifying performance and eliminating uncertainty, the present invention is differentiated from the prior art underreamers exemplified by CA2617699 and GB2417267. These are unsatisfactory as they depend on cutter positions or hydraulics or drilling practices as an indicative assumption that the planned underreamed hole is actually being delivered. There are no actual measurements whether direct or inferred. Additionally, they depend on pressure restrictions for activation such as the use of a dart to create a pressure differential. The present invention does not require such activation means and it can be activated using non-mechanical means via telemetry which may be a mud-pulsed signal or wireless transmission.

US 2008/0128175 A1 **discloses an expandable reamer apparatus for drilling a subterranean formation including a tubular body, one or more blades, each blade positionally coupled to a sloped track of the tubular body, a push sleeve and a drilling fluid flow path extending through an inner bore of the tubular body for conducting drilling fluid therethrough. Each of the one or more blades includes at least one cutting element configured to remove material from a subterranean formation during reaming. The push sleeve is disposed in the inner bore of the tubular body and coupled to each of the one or more blades so as effect axial movement thereof along the track to an extended position responsive to exposure to a force or pressure of drilling fluid in the flow path of the inner bore.**

It is unsatisfactory to depend on indirect indicators such as whether cutter blocks are open or closed or whether drilling fluid pathways are open and a pressure spike is seen at the rig. Such indicators do not provide actual direct measurements of the underreamed well-bore diameter nor do they provide verification of underreaming performance; they simply give information on the mechanical or hydraulic status of an aspect of the tool which may or may not lead to the desired well diameter.

According to the prior art, the drilling industry relies on less rudimentary and more time-consuming indicators of verification such as an increase in drilling torque as cutters interact with the formation or even pulling up the drill-string and underreamer to the previous hole size in order to see whether the top-drive stalls as the bottom-hole assembly is introduced with the tool expanded.

Therefore, the prior art does not disclose any systems that provide a reliable means of simultaneously verifying well-bore diameter while drilling or underreaming.

Furthermore, the prior art shows that current systems generate time-consuming cycles of entry and exit into the well-bore related to drilling, underreaming and measurement equipment.

Furthermore, the prior art shows that current systems do not detect variations in well-bore diameter in real-time.

Furthermore, the prior art shows that current systems do not automatically troubleshoot undergauge hole diameters or tool malfunctions.

Furthermore, the prior art shows that current systems have limited application for a caliper outside the cutter block.

Furthermore, the prior art shows that current systems rely on pressure restrictions for activation.

### SUMMARY OF THE INVENTION

**The invention is defined by the independent claims.**

The present invention has for a principal object to provide an improvement on the prior art in wellbore underreaming wherein the actual diameter of the underreamed hole is measured directly in real time, that is to say simultaneously with, or immediately after, a wellbore expansion operation.

The invention is based on an integrated underreamer and caliper equipped with one or more means for measuring the underreamed wellbore diameter and drilling fluid property measurement means, which provide real time performance verification and automated troubleshooting. This has not been forthcoming in the prior art due to design limitations inherent in the hydraulic or weight activation methods and due to the block retention mechanisms or mechanical caliper designs.

The present invention seeks to integrate and automate underreaming and eliminates the need for a caliper that is separate from the underreamer and minimizes the need for corrective underreaming runs by providing real-time data which allows the driller to respond earlier thereby saving time and money on wellbore operations.

It is thus an object of the present invention to provide underreaming expansion blocks integrated with calipers for measuring the underreamed wellbore diameter, enabling the tool to give immediate measurements of the accuracy of the wellbore-widening operation and, if the diameter is found insufficient or undergauge, to automatically detect and diagnose the potential faults, and to repeat underreaming until a satisfactory result is achieved.

As underreaming is the principal route to wellbore diameter enlargement, the invention may be applied to alternative enlargement means integrated with measurement systems that use bicentre bits, fixed wing bits, eccentric underreamers and expandable bits.

The tool is capable of widening the wellbore diameter, taking data about the underreamed wellbore diameter from the caliper, which is preferably an acoustic caliper, by transmitting and receiving ultrasonic acoustic pulses which enable verification of performance through a processor that receives data and conducts diagnostics of the diameters according to a logic circuit in order to ensure the underreamer is functioning through the correct expansion of the cutter blocks and stabilizers. If the corrective steps have been taken and the caliper for measuring the underreamed wellbore diameter indicates that the planned hole diameter is still not being delivered a signal will be sent to the control area at the surface to the operating engineer so that further remedial action can be taken, such as tool replacement. The tool's memory card may download data to the control device at surface when the tool is retrieved, or sent in real time to the surface by telemetry.

The tool may also have a telemetry system using, as transmission means, the drilling mud to allow monitoring of the position of the expansion blocks with the data recorded by the caliper for measuring the underreamed wellbore diameter, which may be a mechanical caliper or an acoustic caliper provided with ultrasonic acoustic transmitters and receivers while it transmits sound waves which are reflected back by the wellbore wall or by the far formation which may be a cavernous formation in order to be picked up by a sensor installed in the same tool. The travel time of the sound waves at a given speed can be processed and integrated into the control system in order to determine the distance travelled.

A keyway may be provided in the body of the tool to facilitate the arrangement of the acoustic sensors, which will be connected to the processor and transponder situated in the tool body. The data obtained by the acoustic sensors, constituted by transmitters and receivers joined by means of a hard wire, will be sent from the processor to the transponder and will be integrated with the rest of the data received by the control system located at the surface. The keyway may be sealed and filled with a means to absorb vibration such as silicone gel or grease and to maintain wires in position.

The transponder converts data so that it can be transmitted to the surface by means of the mud-pulser which uses a series of binary codes at a given frequency using drilling fluid as means of transmission. Other means of wireless transmission can be used, using radio frequency or electro-magnetic pulses. This allows up and downlink of the tool in order to receive and transmit data and commands. The data may be transmitted to the surface for use by the drilling operator or may be further transmitted by satellite to a remote operations centre.

The preferred embodiment of the invention provides for a wellbore underreaming tool (50), which is particularly applicable in oil and gas wells, arranged for attachment to a rotary drill-bit and associated drill-pipe, which is characterized in that it has at least one radially extendable cutter block (62) incorporating a sensor to measure the relative position of said cutter block, at least one measurement probe (76 or 64-66) to determine the wellbore diameter, and at least one radially extendable stabilizer block (63), all of which, together with their receivers, microprocessors and transponders, are integrated within the body of the tool; a system of verification and control of the desired wellbore diameter (22) through comparison and correlation of the simultaneous measurements from the caliper and the relative position of the extendable cutter block (62); and at least one transmitter/sensor device (210, 160) that analyzes fluid characteristics with its receivers, micro-processors and transponders integrated within the body of the tool.

The tool support may be the drill string but it may also be a length of coiled tubing.

The tool body is a cylindrical high grade steel housing adapted to form part of the bottom-hole assembly by means of a screw connection arranged at the end of the tool, which is coupled to the drill head. The attachment need not be direct, but may be indirect, depending on the requirements of the different elements of each drill string and each well. The lower end of the BHA may be a drill bit, or a bull nose, and this part and the tool there may or may not be a means for directional control of the wellbore such as a rotary steerable system.

The wellbore expansion activity of underreaming is achieved through the tool by means of the cutter block or cutter blocks. The cutter blocks are situated within the tool body in an open chamber, the outer surface of which is composed of a plurality of high strength cutter elements such as polydiamondcrystalline inserts arranged externally. The cutter block is provided with an external nozzle adjacent or along the set of cutter elements that injects drilling fluid that comes from an internal duct (90) connected to the source of said fluid.

The tool comprises a module that can be coupled by means of a thread connection to the body of the tool which comprises expandable stabilizing blocks in order to stabilize the tool against the wellbore walls during underreaming and measurement and if so required, increase or expand the diameter of the metallic tube casing of the well.

It is to be noted that the description herein of the expansion blocks is applicable generally, irrespective of the function of cutting, expansion or stabilization of the drill string. Thus, the cutter blocks are provided with cutting inserts or teeth to enable underreaming of the wellbore that may be retracted or replaced by other surfaces for exclusively expansion operations of the steel tubular inside the wellbore.

The control means based on microprocessors (68) are adapted to receive, during drilling operations, information simultaneously from the probe for measuring the wellbore diameter and from the sensors of the extendable cutter block to control the extension and retraction of said block in response to the control logic according to the received data, in order to detect and correct failures in real-time to allow the desired wellbore diameter to be obtained.

The tool normally comprises a plurality of such cutter blocks, arranged symmetrically around the tool. Two cutter blocks would be on opposite sides of the tool, three blocks would be separated by 120 degrees, four blocks by ninety degrees, and six by sixty degrees. In operation, the tool is typically rotated together with the drill string as well as being moved axially along the wellbore.

The tool body is provided with an internal duct for receiving drilling fluid via a nozzle device adjacent the cutter. In each case, the nozzles provide a fluid flow that can help to keep the cutters clean and prevent the build-up of clogging debris from the reaming operation and provide a cooling and lubricating function for the cutters. In one preferred aspect of the present invention the tool incorporates a non-mechanical means of measurement such as an acoustic caliper for measuring the underreamed wellbore diameter.

The calipers for measuring the underreamed wellbore diameter with which the underreamer is equipped emit sound pulses that generate reflections on the walls, which are transmitted to a receiver sensor which calculates the distance by multiplying time by the propagation speed of the acoustic pulse. The underreamed wellbore diameter calipers are generally located in the tool body above the underreamer but in an alternative configuration of the tool may be placed within the cutter block itself in the most radially extended zone among the cutting elements.

The skilled operator will readily appreciate that other procedures may be implemented by the logic circuit or control program within the tool's processors, which can be programmed to cover other scenarios.

### BRIEF DESCRIPTION OF THE DRAWINGS

The various embodiments of the invention are illustrated by way of non-limiting example in the accompanying drawings, in which:
Figure 1 is a general diagrammatic view of an oil or gas well showing surface structures and the interior of the underground wellbore, with a tool in accordance with the invention as part of the final bottomhole assembly;
Figure 2 is a longitudinal section of the tool showing the expansion elements constituted by both cutter blocks and stabilizer blocks in a deactivated state;
Figure 3 is a cross section of the tool as seen from the drill bit, showing the diameters of the drill bit, of the encased tube and of the desired underreaming of the wellbore in accordance with the invention shown in the previous Figures, in the operative mode of the expanded expansion cutter blocks (activated operating mode);
Figure 4 shows a cross-section of the tool as seen from the drill bit, showing the diameters of the drill bit, of the encased tube and of the desired underreaming of the wellbore, according to the invention shown in earlier figures in the operative mode of the retracted expansion cutter blocks (deactivated operating mode);
Figure 5 shows a cross-section of the body of the tool showing longitudinal open channels which allow drilling fluid to pass through and where the transmitter/sensor device is placed in order to measure certain characteristics of the said fluid (density).
Figure 6 is a general view of the well illustrating telemetry of the underreaming and drilling data recorded by the tool;
Figure 7 corresponds to Figure 6 but illustrates downlink telemetry of the data with set parameters sent in order to control the underreaming and drilling by the tool; and
Figure 8 is an algorithm and shown as an exemplary diagnosis and troubleshooting procedure for operational aspects of the underreaming and measurement of the drilling variables according to the invention.

### DETAILED DESCRIPTION OF THE INVENTION

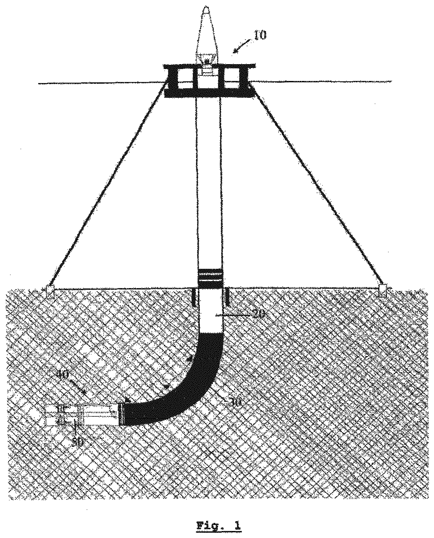

As shown in Figure 1, an exploration or production rig comprises a surface structure (10) at the wellhead, a wellbore (20), a drill string (30) in the wellbore and a bottom-hole assembly (40) at its lower end where the tool (50) may be configured according to the present invention with the desired configuration of modules: module housing the expandable cutter blocks, module housing the sensors and processors and the module with expandable stabilizer blocks or expandable casing elements of the metal tube of the wellbore. The tool (50) comprises at least one underreamer module integrated with a wellbore diameter measurement caliper tool incorporating other sensors, and capable of connection to a drill-bit (not shown).

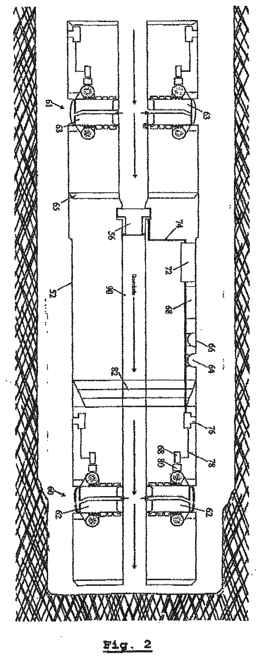

The longitudinal section of the tool illustrated in Figure 2 comprises a steel tool body (52) provided with an internal drilling channel (90) at its downhole end and a mud-pulser (56) at its other end, which is adapted to be engaged by a further drill collar (not shown) to connect it to the other elements of the bottom-hole assembly (40), and then to the drill string (30).

The tool body is also provided with elements for cutter expansion (60) and stabilizers (61), a wellbore diameter measurement caliper (76 or 64-66) uphole of the cutter blocks (62). The expandable cutter element (60) is composed of various cutter blocks (62) placed symmetrically and radially outwards of the tool body (52) as shown in Figure 2 in the de-activated status with the blocks retracted inside the tool.

The tool incorporates an acoustic caliper comprising an acoustic transmitter and receiver which can be housed within the body of the tool in sealed recesses (64 and 66). Tool performance is verified using the micro-processor (68) that compares data recorded by the acoustic receiver sensor (66) with the programmed wellbore diameter, thus detecting possible deviations from the desired wellbore diameter. The tool is automated according to logic control sequences stored in each processor (68) in order to ensure the underreamer is functioning correctly. Once verification and corrective steps have been taken, and if the caliper for measuring the underreamed wellbore diameter (76) indicates that the required hole diameter is still not being delivered, a signal is sent via the mud-pulser (56) to the rig-surface (10) to allow control commands to be sent by the operator either locally or by remote control, adopting the relevant operative and corrective measures such as modification of the pump flow rate of mud or drilling fluid, replacement of the bottom-hole assembly etc. The memory card associated with the processor (68) will contain the data from the sensors transmitted in real time in order to be used in the underreaming and drilling operations (56) or are obtained physically by removing said card when the tool is retrieved from the well.

The tool is provided with a built-in link to the telemetry system (56) which also serves to monitor performance of the under-reaming operation, position of expansion blocks (62) and data recorded by the caliper for measuring the underreamed wellbore diameter (76). One or more acoustic sensors (64) are placed within the tool body (52) in order to emit a number of sound waves during a given time period which are reflected back by the wellbore wall (22) and picked up by the receiver sensors (66). The processor (68) calculates the distance using travel time and speed of return of the acoustic waves and compares this to the programmed desired diameter. If the two measurements match given user-defined tolerances the tool continues to operate to the total depth of the wellbore section to be widened. Where the measurements do not match the processor automatically activates a series of logic steps to troubleshoot the operation.

As further shown in Figure 2, a keyway (74) provides a channel for wiring of the acoustic pulsers or transmitters (64) and the acoustic sensor/receivers (66) to the processor (68), and also to the transponder (72). The wiring is used to transmit acoustic data retrieved by reflection as well as positional data from the cutter and stabilizer blocks to the processors and transponders. The keyway may be sealed and filled with a means to absorb vibration such as silicone gel.

The transponder (72) converts data from the processor (68) so that it can be transmitted to surface (10) via the mud-pulser (56) which transmits the data to surface using a series of binary codes at a given frequency using the drilling mud itself as means of transmission. Other means of wireless data transfer may be used such as systems using radio frequency or electro-magnetic pulses.

Figure 2 also shows an alternative location for the caliper for measuring the underreamed diameter which may be a caliper (76) arranged in an encapsulated recess connected to wiring in keyway (74) connected to the processor which may also be connected to the acoustic (transmitter/receiver) probes (66-64) and a new keyway connection (78) which may be connected to an alternate processor (68) which controls an activation motor (80) for the expandable block (62). Figure 2 also shows the arrangement of an internal duct or axial through passage (90) in the tool for transporting the flow of mud through the whole bottom-hole assembly (40). The encapsulated recess may house a caliper (76) and may also be used to house other types of sensors such as a vibration sensor to detect stick-slip conditions.

The tool may be configured in three modules integrated by means of screw connections (65) and (82). The body of all parts of the tool (52) is a cylindrical high grade steel housing adapted to form part of the bottom-hole assembly (BHA) (40) via internal screws to ensure the through flow of drilling fluid (90). The connection may be direct or indirect depending on the needs of the different drilling components of each BHA and each well. At the leading downhole end of the BHA there may be a drill-bit or a stabilizer and between this point and the tool there may be a wellbore directional control system. The stabilizing blocks (63) are constructed identically to the cutter blocks (62), except that in place of cutter elements there is a surface which is hard faced or coated with a hard abrasion-resistant material.

The hard faced surfaces of the stabilizer expansion blocks act to stabilize the drill string and eliminate some of the problems associated with the loss of directional control above the underreamer when the diameter in said zone is less than that of the underreamer. Likewise, it can be used to expand or enlarge the diameter of metal tubes by deformation of the latter in drilling recesses. In this case, the tool body facilitates the operation of expanding or enlarging the diameter of the drilling tube and is connected to the drill head assembly by means of a screw present in said body.

The stabilizer module may be directly or indirectly connected to the underreamer and hard-wired accordingly to send data from the processor (68) to the transponder (72) through the mud-pulser (56) to surface.

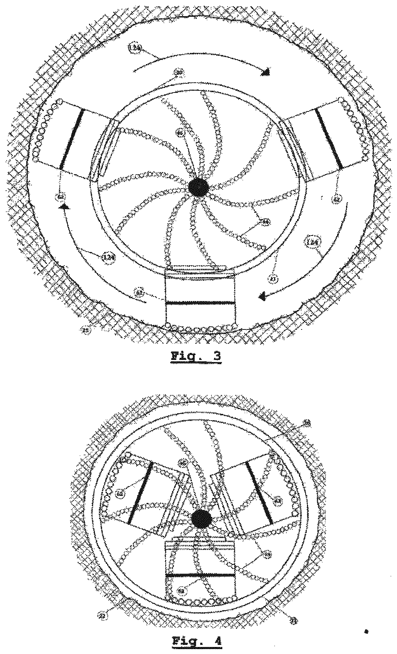

Figure 3 shows an uphole front view of the bit illustrating the expandable cutter elements (60) in the activated mode, i.e. with cutter blocks (62) expanded outwardly of the tool body and supported against the underreamed wellbore wall (22) which arises from the wellbore (20) which has not been underreamed. Figure 3 shows the arrangement of the drill bit teeth in which there are ten curved rows of cutters (44), with cutter teeth in each one. A central drilling fluid outlet (46) indicates where drilling fluid passes through the internal channel (90) in the tool body (52). The direction of rotation (124) of the bottom-hole assembly of the drill bit is shown, in which there are ten curved rows of cutters (44) with cutter teeth in each one.

Figure 4 illustrates the same front view as Figure 3 with the expandable cutter elements (60) in a deactivated condition, i.e. with cutter blocks (62) retracted within the inner chambers of the tool body without exceeding the wellbore diameter that has not been underreamed (20).

Each block is provided with lines or magnetic strips that allow a sensor to detect the actual position of the blocks. The magnetic signal is at its strongest when the block is fully extended and the magnetic line and sensor are aligned. In this way, it can be seen whether the block has actually been extended and determine its extension length and position.

Data from the underreamed wellbore diameter caliper is compensated and can be used to verify whether the desired diameter is actually being delivered by checking wellbore diameter against expansion block position. When the processor detects a difference between these two measurements, the control logic program automatically troubleshoots the source of the fault.

As noted above, the invention provides a method of real-time drilling operation and control, which uses an extendable tool to underream the borehole to the desired dimension in order to overcome any restriction, by extending the extendable cutter block to a diameter greater than that of the restriction, by rotating the tool and moving it axially along the borehole, enabling the simultaneous measurement of the borehole diameter by means of the probe for measuring the underreamed wellbore diameter, using microprocessors connected to a control area acting in response to data received from the probe for measuring the underreamed wellbore diameter and the position sensor of the lateral cutter block, with the objective of controlling the necessary expansion of said block and achieving the desired wellbore diameter, this method eliminating causes of errors or failures and minimizing drilling time by not requiring the extraction of the drill-string nor introducing an independent gauge probe.

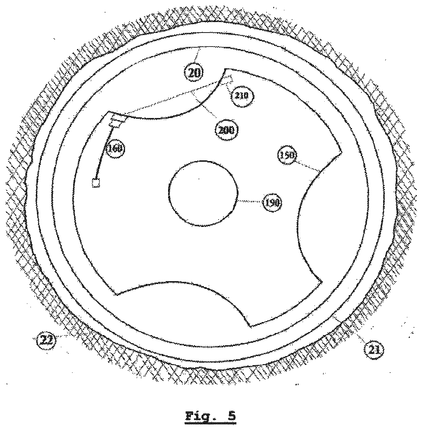

The tool has longitudinal open channels (150) known as "junk flow areas" as shown in Figure 5 where drilling fluid passes freely, incorporating at least one transmitter (210) and a sensor/receiver (160), located at two fixed points, preferably embedded within these channels and facing each other and joined by means of a reinforcing element (200) and connected to a microprocessor in order to permit the measurement of fluid properties, for example changes in density, as it passes through these channels during drilling operations or as it remains in the channels during non-drilling operations. The processor uses these acoustic measurements to detect changes in the density of the drilling fluid.

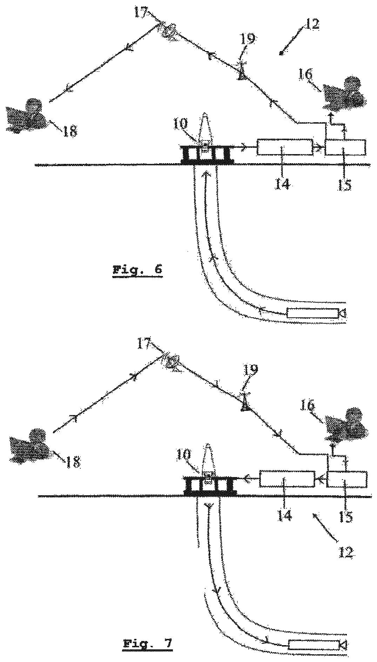

Figures 6 and 7 illustrate how the underreaming tool may utilize means for communicating data from the caliper for measuring the underreamed wellbore diameter and control signals between the tool and a surface interface which may, among other functions, control the advance and trajectory of drilling during the underreaming operation.

As shown in Figures 6 and 7, the wellhead surface structure (10) includes a control and communications system (12) having an interface for telemetry with downhole instrumentation including a data processor or data logger (14) and a controller (15) which decodes binary codes from the mud pulser and may be linked directly to the user's drilling terminal (16). The decoded data may be yet further transmitted by satellite (17) beyond the wellhead to a remote operations centre (18) where another user of the drilling software may access the data and the control by means of a telecommunication link (19).

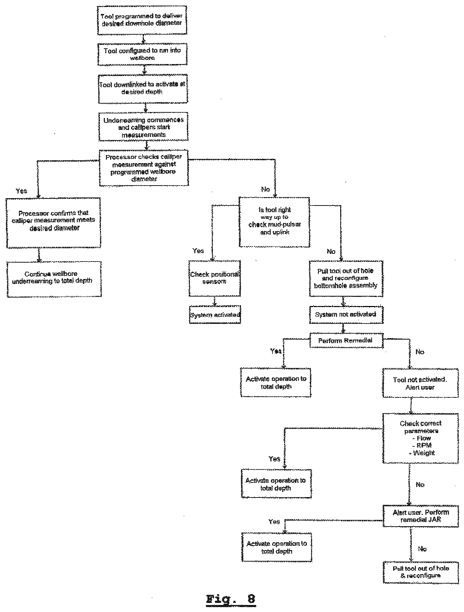

Figure 8 shows a logic diagram, with a control algorithm that may be configured in any number of ways so as to optimize performance.

An exemplary configuration involves a circuit to first cross check the recorded block position data. If the block has been extended by means of the control system yet the data from the caliper for measuring the underreamed wellbore diameter shows that the actual wellbore diameter is below the planned diameter, the processor (68) activates the transponder (72) which communicates with the control area (15) by means of the mud pulser (56) and corresponding decoder (16) to alert the user either on the rig (16) or at a remote centre (18) in which case communication is made through remote data transmission (17 and 19) to check drilling operational parameters and verify the actual underreamed wellbore diameter with that of the desired diameter.

Embodiments of the invention disclose a wellbore underreaming tool (50), especially as used in oil and natural gas drilling, arranged for attachment to a rotary drill-bit and associated drill-pipe, characterized by being composed of:
(i) at least one radially extendable cutter block (62) incorporating a sensor to measure the relative position of said cutter block, at least one measurement probe (76 or 64-66) to determine the wellbore diameter, and at least one radially extendable stabilizer block (63), all of which are inter-connected through microprocessors (68) as well as to a transponder (72) and are integrated within the body of the tool;
(ii) a system of verification and control of the desired wellbore diameter (22) through comparison and correlation of the simultaneous measurements from the probe for measuring the underreamed wellbore diameter and from the sensor measuring the relative position of the extendable cutter block;
(iii) at least one measurement sensor that measures fluid characteristics (210-160) with its micro-processor and is connected to the transponder (72) integrated within the body of the tool.

The control means based on microprocessors (68) may be adapted to receive, during drilling operations, information simultaneously from the probe (76 or 64-66) for measuring the underreamed wellbore diameter and from the sensors of the extendable cutter block to control the extension of said block in response to obtained data, in order to detect and correct any failures in real-time to achieve the desired wellbore diameter.

The tool may be provided with at least one measurement sensor having a transmitter (160) and a receiver (210) located at two fixed points, facing each other and joined by means of a reinforcing element preferably embedded within open longitudinal channels (150) in the body of the tool, through which the flow of drilling fluid freely circulates. Said sensor may have a microprocessor in order to permit the measurement of fluid properties, for example changes in density, as it passes through these channels during drilling operations or as it remains in the channels during non-drilling operations.

The tool may comprise more than one system of expansion elements (60 and 61) integrated within independent modules that are screwed to each other, with the objective that one module comprises cutter blocks that adapt their expansion to the actual underreamed borehole diameter and that the other module comprises the stabilizer blocks that hold the tool against the walls of the wellbore during expansion.

The cutter block that is placed within an open chamber in the body of the tool may be composed of a variety of high strength cutting elements arranged externally and of an internal channel connected from the source of the drilling fluid to an external nozzle placed adjacent to or along these cutting elements.

The tool may further comprise a telemetry device for communicating data from the probe for measuring the underreamed wellbore diameter, the position of the lateral extendable blocks and the other control signals between the tool and a control area (15) provided at the outer surface with a computer or an interface device (16 or 18) so as to permit the operator to optimize drilling performance in real-time.

Embodiments of the invention further provide a method of real-time drilling operation and control, characterized in that it uses an extendable tool to underream the borehole to the desired dimension in order to overcome any restriction, by extending the extendable cutter block or blocks to a diameter greater than that of the restriction, by rotating the tool and moving it axially along the borehole, enabling the simultaneous measurement of the borehole diameter by means of the probe for measuring the underreamed wellbore diameter, using microprocessors connected to a control area acting in response to data received from the probe for measuring the underreamed wellbore diameter and the position probe of the lateral cutter block, with the objective of controlling the necessary expansion of said block and achieving the desired wellbore diameter, this method eliminating causes of errors or failures and minimizing drilling time by not requiring the extraction of the drill-string nor introducing an independent gauge probe.

The method may connect data received from the relative position of the extendable cutter blocks, from the probe for measuring the underreamed wellbore diameter and from drilling fluid characteristics to a surface control area with the possible transmission of data to a further location, that controls the parameters of positioning of the extendable blocks and controls the adaptation of the wellbore underreaming operation.

## Claims

1. A wellbore underreaming tool (50), especially as used in oil and natural gas drilling, arranged for attachment to a rotary drill-bit and associated drill-pipe, comprising at least one radially extendable cutter block (62) incorporating a sensor to measure the relative position of said cutter block, wherein the cutter block is provided with a magnetic line or strip and the sensor to measure the relative position of the cutter block comprises a magnetic sensor to detect the position of the block by virtue of the alignment of the magnetic line or strip and the magnetic sensor.

2. A tool as claimed in any preceding claim, wherein the cutter block is configured to expand outwardly toward and against the interior wall of a wellbore or a tubular used as casing and to apply pressure against the wall.

3. A tool as claimed in any preceding claim, further comprising:
at least one measurement probe (76, 64-66) to determine the wellbore diameter, the cutter block and the measurement probe being integrated within the body of the tool;
a control system configured for verification and control of the desired wellbore diameter (22) through comparison and correlation of the simultaneous measurements from the measurement probe and from the sensor measuring the relative position of the extendable cutter block.

4. A tool as claimed in claim 3, wherein the control system (68) is adapted to receive, during drilling operations, information simultaneously from the measurement probe (76, 64-66) and from the sensor of the extendable expansion block to control the extension of said block in response to obtained data, in order to detect and correct any failures in real-time to achieve the desired wellbore diameter.

5. A tool as claimed in any preceding claim, wherein the tool is a rotary steerable system.

6. A tool as claimed in any preceding claim, comprising a module housing a sensor (64-66) and a microprocessor (68), a module (60) housing expandable cutter blocks (62), the module (60) housing the expandable cutter blocks (62) at a leading downhole end connected directly or indirectly to a rotary steerable and a drill bit.

7. A modular system providing a tool as claimed in any preceding claim, the system comprising a plurality of interconnectable modules and the modules comprise a module (60) housing expandable cutter blocks (62), a module with expandable stabilizer blocks (63), and preferably a module housing a sensor (64-66) and a microprocessor (68).

8. A method of real-time drilling operation and control, the method comprising:
providing a tool as claimed in any of claims 2-7, underreaming a borehole to a desired dimension in order to overcome any restriction, by extending at least one extendable cutter block to a diameter greater than that of the restriction, rotating the tool and moving the tool axially along the borehole,
simultaneously measuring the borehole diameter by means of the measurement probe,
in response to data received from the measurement probe and a sensor for the relative position of the cutter block, controlling the extension of the cutter block to achieve the desired wellbore diameter.

## Patentansprüche

1. Werkzeug zur Aufweitung von Bohrlöchern (50), insbesondere wie es bei Öl- und Erdgasbohrungen verwendet wird, das für eine Befestigung an einem Drehbohrer und einem damit verbundenen Bohrgestänge eingerichtet ist, umfassend mindestens einen radial ausfahrbaren Schneideblock (62), der einen Sensor zum Messen der relativen Position des Schneideblocks beinhaltet, wobei der Schneideblock mit einer magnetischen Linie oder einem magnetischen Streifen versehen ist und der Sensor zum Messen der relativen Position des Scheideblocks einen Magnetsensor umfasst, um die Position des Blocks, auf Basis der Ausrichtung der magnetischen Linie oder des magnetischen Streifens und des Magnetsensors, zu detektieren.

2. Werkzeug nach einem der vorhergehenden Ansprüche, wobei der Schneideblock so konfiguriert ist, dass er sich nach außen in Richtung und gegen die Innenwand eines Bohrlochs oder eines als Gehäuse verwendeten Rohres ausdehnt und Druck gegen die Wand ausübt.

3. Werkzeug, nach einem der vorhergehenden Ansprüche, ferner umfassend:
mindestens eine Messsonde (76, 64-66) zum Bestimmen des Bohrlochdurchmessers, wobei der Schneideblock und die Messsonde innerhalb des Werkzeugkörpers integriert sind;
ein Regelungssystem, das konfiguriert ist, zur Überprüfung und Regelung des gewünschten Bohrlochdurchmessers (22), durch Vergleich und Korrelation der simultanen Messungen von der Messsonde und von dem Sensor, der die relative Position des ausfahrbaren Schneideblocks misst.

4. Werkzeug nach Anspruch 3, wobei
das Regelungssystem (68) angepasst ist, während der Bohrarbeiten gleichzeitig Informationen von der Messsonde (76, 64-66) und von dem Sensor des ausfahrbaren Expansionsblocks zu erhalten, um die Ausdehnung des Blocks als Reaktion auf die erhaltenen Daten zu regeln, um jegliche Fehler in Echtzeit zu detektieren und zu korrigeren, um den gewünschten Bohrlochdurchmesser zu erreichen.

5. Werkzeug nach einem der vorhergehenden Ansprüche, wobei das Werkzeug ein drehend lenkbares System ist.

6. Werkzeug nach einem der vorhergehenden Ansprüche, umfassend ein Modul, in dem ein Sensor (64-66) und ein Mikroprozessor (68) vorgehalten werden, ein Modul (60), in dem ausfahrbare Schneideblöcke (62) vorgehalten werden, wobei das Modul (60) die ausfahrbaren Schneidblöcke (62) an einem vorderen Bohrlochende vorhält, das direkt oder indirekt mit einem drehend lenkbaren Bohrer und einem Bohrer verbunden ist.

7. Modulares System, das ein Werkzeug nach einem der vorhergehenden Ansprüche bildet, das System umfassend, eine Vielzahl miteinander verbindbarer Module wobei die Module ein Modul (60) umfassen, das die ausfahrbaren Schneideblöcke (62) vorhält, ein Modul mit ausfahrbaren Stabilisierungsblöcken (63) und bevorzugt ein Modul, das einen Sensor (64-66) und einen Mikroprozessor vorhält.

8. Verfahren zur Echtzeit-Bohrung und -Regelung, das Verfahren umfassend:
Bereitstellen eines Werkzeugs nach einem der Ansprüche 2-7, Aufweiten eines Bohrlochs auf eine gewünschte Abmessung, um jegliche Verengungen zu überwinden, indem mindestens ein ausfahrbarer Schneideblock auf einen Durchmesser ausgefahren wird, der größer ist als der der Verengung,
wobei das Werkzeug gedreht und axial entlang des Bohrlochs bewegt wird, simultanes Messen des Bohrlochdurchmessers mit Hilfe der Messsonde,
als Reaktion auf Daten, die von der Messsonde und einem Sensor für die relative Position des Schneideblocks empfangen werden, Regeln des Ausfahrens des Schneideblocks, um den gewünschten Bohrlochdurchmesser zu erreichen.

## Revendications

1. Un outil d'élargissement de puits de forage (50), en particulier utilisé en forage pétrolier ou de gaz naturel, agencé pour être fixé à un trépan rotatif et associé à une tige de forage, comprenant au moins un bloc de coupe (62) déployable radialement incorporant un capteur pour mesurer la position relative dudit bloc de coupe, dans lequel le bloc de coupe est pourvu d'une bande ou ligne magnétique, et le capteur destiné à mesurer la position relative du bloc de coupe comprend un capteur magnétique pour détecter la position du bloc à raison de l'alignement de la bande ou ligne magnétique et du capteur magnétique.

2. Un outil tel que revendiqué dans la revendication précédente, dans lequel le bloc de coupe est configuré pour se déployer vers l'extérieur en direction et contre la paroi intérieure d'un puits de forage ou d'une tubulure utilisée comme cuvelage, et pour appliquer une pression contre la paroi.

3. Un outil tel que revendiqué dans l'une des revendications précédentes, comprenant en outre :
au moins une sonde de mesure (76, 64-66) pour déterminer le diamètre du puits de forage, le bloc de coupe et la sonde de mesure étant intégrés au sein du corps de l'outil ;
un système de contrôle configuré pour vérifier et contrôler le diamètre souhaité du puits de forage (22) par le biais d'une comparaison et d'une corrélation de mesures simultanées, en provenance de la sonde de mesure et en provenance du capteur, mesurant la position relative du bloc de coupe déployable.

4. Un outil tel que revendiqué dans la revendication 3, dans lequel le système de contrôle (68) est apte à recevoir pendant des opérations de forage des informations, simultanément en provenance de la sonde de mesure (76, 64-66) et en provenance du capteur du bloc de découpe déployable, pour contrôler le déploiement dudit bloc en réponse aux données obtenues, afin de détecter et de corriger en temps réel toutes les défaillances pour obtenir le diamètre de puits de forage souhaité.

5. Un outil tel que revendiqué dans l'une des revendications précédentes, dans lequel l'outil est un système orientable rotatif.

6. Un outil tel que revendiqué dans l'une des revendications précédentes, comprenant un module logeant un capteur (64-66) et un microprocesseur (68), un module (60) logeant des blocs de coupe déployables (62), le module (60) logeant les blocs de coupe déployables (62) au niveau d'une extrémité d'attaque de fond de puits directement ou indirectement reliée à un orientable rotatif et à un trépan.

7. Un système modulaire procurant un outil tel que revendiqué dans l'une des revendications précédentes, le système comprenant une pluralité de modules interconnectables, où les modules comprennent un module (60) logeant des blocs de coupe déployables (62), un module avec des blocs stabilisateurs déployables (63), et de préférence un module logeant un capteur (64-66) et un microprocesseur (68).

8. Un procédé de mise en œuvre et de contrôle de forage en temps réel, le procédé comprenant :
l'obtention d'un outil tel que revendiqué dans l'une des revendications 2 à 7,
l'élargissement d'un puits de forage à une dimension souhaitée afin de remédier à tout étranglement, par déploiement d'au moins un bloc de coupe déployable à un diamètre supérieur à celui de l'étranglement, mise en rotation de l'outil, et déplacement de l'outil axialement le long du puits de forage,
simultanément, mesure du diamètre du puits de forage à l'aide de la sonde de mesure,
en réponse à des données reçues en provenance de la sonde de mesure et d'un capteur de position relative du bloc de coupe, contrôle du déploiement du bloc de coupe pour aboutir au diamètre de puits de forage souhaité.
